# EUROPEAN PATENT APPLICATION

(11) **EP 4 617 914 A1**
(43) Date of publication of application: **17.09.2025**
(21) Application number: 25159811.6
(22) Date of filing: 25.02.2025
(51) Int. Cl.: G06F 16/93

(54) **A METHOD, AN APPARATUS AND A COMPUTER PROGRAM PRODUCT FOR AUTOMATED DOCUMENT REVIEW AND COMPLIANCE CHECK**

(30) Priority: 15.03.2024 US 202418606400
(71) Applicant: M-Files Oy, 33100 Tampere (FI)
(72) Inventor: Plakhuta, Anna, FREDERICTON, NB, E3G 0C8 (CA); Towler, Christopher, NASONWORTH, NB, E3C 0J3 (CA); Bradley, Raphaël, FREDERICTON, NB, E3B 9L3 (CA); Moawad, Mohamed, FREDERICTON, NB, E3A 0K7 (CA); Singh, Ramanpreet, CALGARY, AB, T3H 5C4 (CA)
(74) Representative: Berggren Oy

(57) **Abstract**

The embodiments relate to method and a system for a data management, wherein the data management system comprises a vault for storing at least a plurality of documents, where each of the documents is associated with metadata, wherein the metadata comprises a set of properties, the method comprising receiving a selection of at least one document; determining a set of rules for the selected at least one document; employing a machine learning model to review content of the selected at least one document based on the set of rules; and receiving from the machine learning model result on the reviewing, the result indicating whether the document comply with the set of rules or whether the document does not comply with the set of rules.

## Description

### Technical Field

The present solution generally relates to data management systems, and in particular to a method for an automated document review and compliance check.

### Background

Knowledge work (also known as "thought work" or "mind work") refers to any task that is performed primarily through exercising knowledge and creativity. "Knowledge work automation" refers to a technology that streamlines knowledge worker's tasks to eliminate anything that does not make best use of their skills. Such technology driven approach focuses on bringing together all the tools a knowledge worker needs to minimize the time they spend on task that should not require their attention.

### Summary

The present embodiments aim to provide an improved method and a system that further automates processes relating to knowledge work automation in data management systems.

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for receiving a selection of at least one document; means for determining a set of rules for the selected at least one document; means for employing a machine learning model to review content of the selected at least one document based on the set of rules; and means for receiving from the machine learning model result on the reviewing, the result indicating whether the document comply with the set of rules or whether the document does not comply with the set of rules.

According to a second aspect, there is provided a method, comprising: receiving a selection of at least one document; determining a set of rules for the selected at least one document; employing a machine learning model to review content of the selected at least one document based on the set of rules; and receiving from the machine learning model result on the reviewing, the result indicating whether the document comply with the set of rules or whether the document does not comply with the set of rules.

According to a third aspect, there is provided an apparatus comprising at least one processor, memory including computer program code, the memory and the computer program code configured to, with the at least one processor, cause the apparatus to perform at least the following: receive a selection of at least one document; determine a set of rules for the selected at least one document; employ a machine learning model to review content of the selected at least one document based on the set of rules; and receive from the machine learning model result on the reviewing, the result indicating whether the document comply with the set of rules or whether the document does not comply with the set of rules.

According to a fourth aspect, there is provided computer program product comprising computer program code configured to, when executed on at least one processor, cause an apparatus or a system to: receive a selection of at least one document; determine a set of rules for the selected at least one document; employ a machine learning model to review content of the selected at least one document based on the set of rules; and receive from the machine learning model result on the reviewing, the result indicating whether the document comply with the set of rules or whether the document does not comply with the set of rules.

According to an embodiment, a metadata for the selected at least one document defines a workflow, wherein the method further comprises setting document's workflow to a state that corresponds to the result.

According to an embodiment, document's metadata is updated based on the result.

According to an embodiment, at least one metadata property is used to determine the set of rules.

According to an embodiment, the set of rules is generated based on a query received from a user via a user interface.

According to an embodiment, content of the selected at least one document is reviewed based on the set of rules and a metadata of said document.

According to an embodiment, content of the selected at least one document is reviewed based on the set of rules and a metadata of another object being referred to by the set of rules.

According to an embodiment, the computer program product is embodied on a non-transitory computer readable medium.

The previous embodiments can be combined to provide further embodiments.

### Description of the Drawings

In the following, various embodiments will be described in more detail with reference to the appended drawings, in which
- Fig. 1: shows a simplified example of a data management system;
- Fig. 2: shows a simplified (and partial) example of a metadata structure;
- Fig. 3a: shows an example of a simple workflow;
- Fig. 3b: shows an example of a metadata relating to a workflow of Fig. 3a;
- Fig. 4: is a simplified example of a general architecture of a system according to an embodiment;
- Fig. 5: shows a simplified example of a method according to an embodiment;
- Figs. 6a - 6c: show simplified examples of user interface views for verification process;
- Fig. 7: shows a simplified example of a document under verification process,
- Fig. 8: shows an example of ML model with its inputs and output;
- Fig. 9: is another example of a general architecture of a system according to an embodiment; and
- Fig. 10: is a flowchart illustrating a method according to an embodiment.

### Description of Example Embodiments

The following description and drawings are illustrative and are not to be unnecessarily construed as limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

The present embodiments relate to a data management system storing data objects. The data objects comprises at least text files that are referred to as "documents" and other objects representing e.g., actions, parties, terms, classes, clients or other data that can be virtually represented and electronically managed by the data management system. In addition to text files, objects relating to other file types may be stored in the data management system, such image files, audio files, video files. For simplicity, files and objects that are stored in the data management are generally referred to as "objects". The objects stored in the data management system are associated with metadata that defines characteristics of the respective object. Metadata can be stored in a different server than the object which the metadata is associated to. In the present disclosure, a software solution that combines machine learning with metadata technology is discussed, wherein the software solution is configured to automate document reviewing process for any compliance issues.

Before discussing the present embodiments further, a short reference to the related technology is given. Technology for knowledge work exists in markets. Their purpose is to automate entire knowledge work process from document creation and management to workflow automation, external collaboration, enterprise search, security, compliance and audit trail. This can be accomplished by a data management system, wherein all the data being stored is defined with a metadata.

The metadata is a descriptive label that is added to the object to describe the object. The metadata can be classified into descriptive metadata, administrative metadata or structural metadata. The first type is used for describing objects' content, such as author, creation date, modification date, keywords, etc. The administrative metadata may be used for defining access rights, workflows, security, etc. Structural metadata is used for defining relationships between data objects. Thus, the metadata can be formed of several metadata properties, e.g., a class of the data, title of the data, persons being involved with the data, project where the data is related to, expiration data, customer for the data, etc., wherein each of these metadata properties are given values based on the object the metadata is associated to. When metadata is attached to the object in the data management system, the data object becomes manageable through the metadata. For example, instead of searching data objects based on their location in a folder, the search can be based on the metadata, for example by querying an object(s) whose expiration date is on the following day. Technically the metadata can be represented as a data structure being stored in a corresponding database. The database stores metadata in tabular form representing different properties and values, and their relationships. Any element of the metadata (e.g., property, property value) is identified in the database with an identifier (ID).

In the data management systems, the metadata is also used for defining an automated workflow for an object. In such example, the metadata relating to a workflow will be given values on different workflow states, which further enables a person responsible for that state to view the object. For example, if a document is given a workflow state "ready to be sent", the document is shown on a user interface view of a person that has been defined to be in charge for the sending process of that document. As another example, if a document is given a workflow state "to be corrected", the document is shown on a user interface view of a person who, for example and if defined so, has created the document.

Each data object can have a plurality of metadata, whereupon any piece of metadata can be used for viewing, classifying, retrieving, and/or searching the data from the data management system.

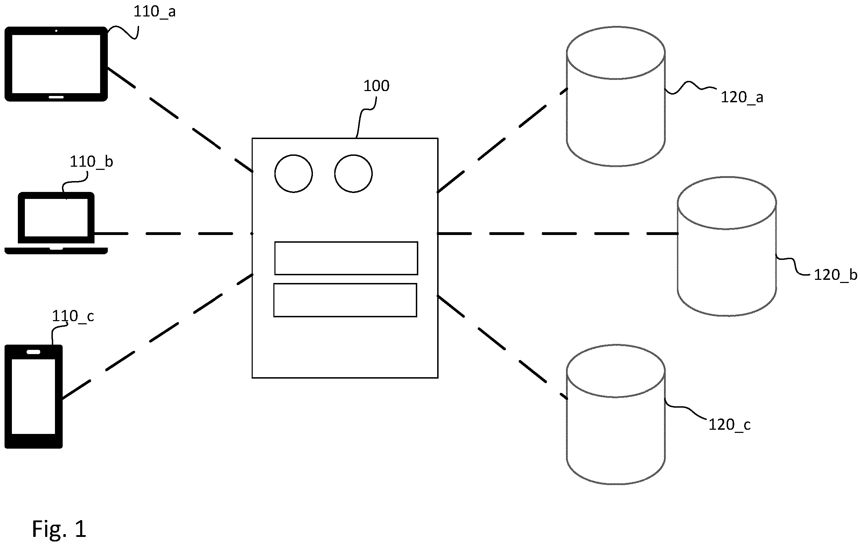

Figure 1 illustrates a simplified architecture for a data management system. The system of this example comprises a server computer 100 running a server component of the data management system and being connected to a plurality of document vaults 120_a, 120_b, 120_c. It is appreciated that the number of document vaults may vary from what has been presented in Figure 1. The server computer 100 comprises a processor and a memory, wherein the memory stores computer readable instructions to be executed by the processor to implement data management operations.

The system also comprises a plurality of client components to enable access from a plurality of client devices 110_a, 110_b, 110_c to any one or more of the document vaults 120_a, 120_b, 120_c for displaying and editing the vault-stored data. Each of the plurality of the client devices 110_a, 110_b, 110_c comprises a user interface view in the client component to the content stored in the data vaults 120_a, 120_b, 120_c, whereupon the data relevant to the user can be seen on the respective user interface view. The user interface view may be generated on a desktop client application or to a browser application. The client devices 110_a, 110_b, 110_c are computer devices comprising a processor and a memory, wherein the memory is configured to store computer program relating e.g., to the client component of the data management system. The client devices 110_a, 110_b, 110_c also comprise means for forming a network connection to the server computer 100. The network connection can be a wireless or wired connection implemented by any known or future network technology.

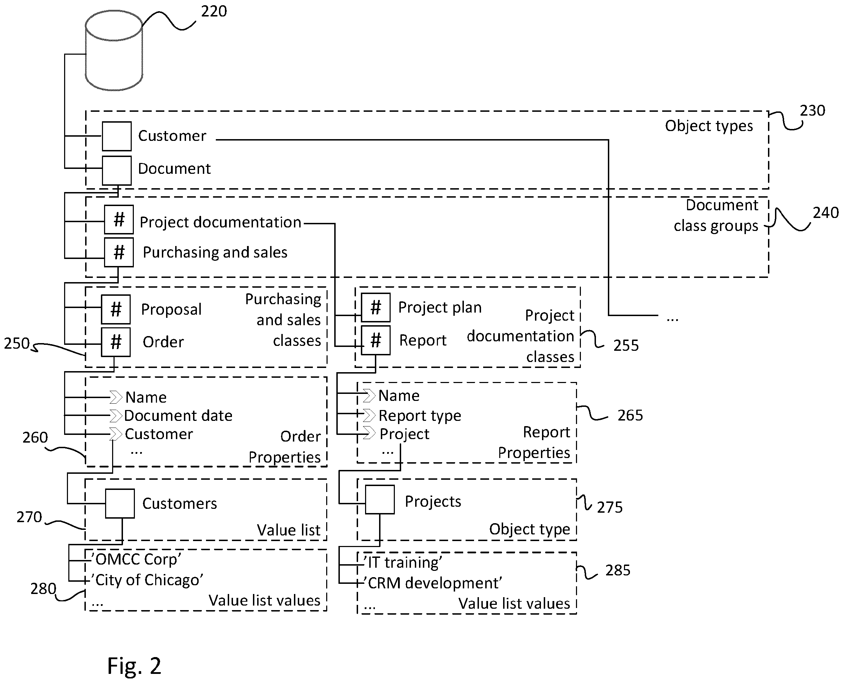

Each of the vaults 120_a, 120_b, 120_c comprises a metadata structure according to which the data is to be stored therein. Figure 2 shows a simplified example of one kind of metadata structure. In Figure 2, a data vault 220 is shown. The vault 220 has a metadata structure comprising object types 230, class groups 240, classes 250, 255, property definitions 260, 265, and value lists 270, 275 and their values 280, 285. The example of Figure 2 is illustrated only from one object type's 230 point of view, said object type being a document. It is appreciated that in the metadata structure there are more than one object types 230, which each have a respective structure. Each object type 230 has its own class groups. Since in this example a document is taken as an example of the object type, the respective class group 240 can be e.g., "project documentation" or "purchasing and sales". These class groups 240 have their respective classes 250, 255. For example "purchasing and sales" can comprise classes 250 "proposal" and "order". Similarly, each of the classes have their corresponding properties. In Figure 2, the "order" has "order properties" 260 comprising e.g., "name", "document date", and "customer". Similarly, in Figure 2, the "report" in project documentation classes 255 comprises "report properties" 265 being e.g., "name", "report type" and "project". These properties 260, 265 can be defined with values as shown with value list 270 or objects as shown with object type 275. Finally, the properties are given values 280, 285, which can be used e.g., for retrieval of data.

Figure 2 is only a simplified example of a metadata structure, and should not be considered limiting. The data, terms, names, types and examples are given for understanding purposes only, and the metadata structure being implemented may vary greatly from what has been shown.

In the automated data management systems, workflow play an important role. Workflows represent virtually organization's administrative and executive processes and are defined by metadata. A workflow state is a metadata property having selectable values defined for that workflow. For example, a document that needs to be seen/edited/approved by one or more organization workers can have a workflow that identifies the different process states for the document and associates responsible persons for these states.

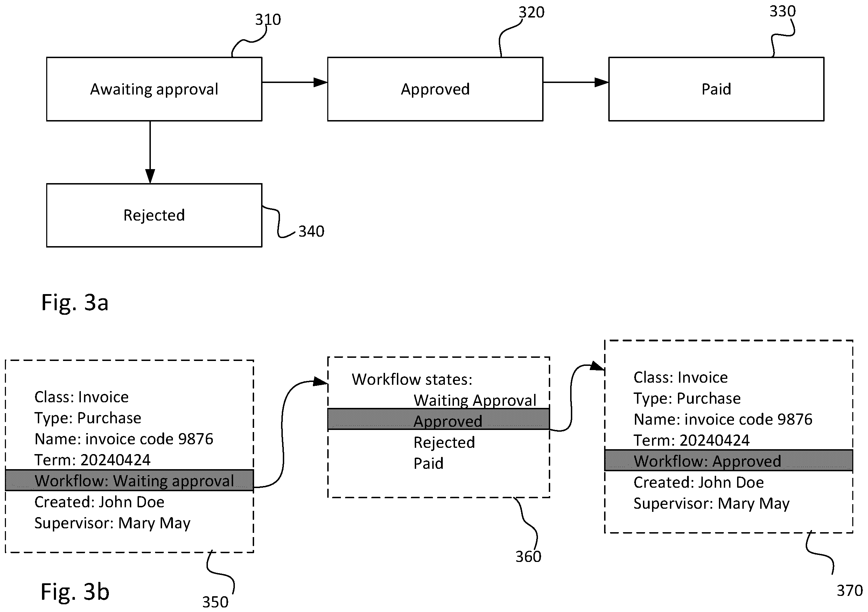

Figure 3a illustrates a simplified example of a workflow relating to a purchase invoice circulation. The various states, i.e., the metadata values, of the workflow are "Awaiting approval" 310, "Approved" 320, "Paid" 330 and "Rejected" 340. The person being responsible for the state "Awaiting approval" 310 either rejects or approves the invoice. This means that the person manually selects the state corresponding to the selection. When the state is changed to "Approved" 320, the purchase invoice is shown to a person responsible for the next action, e.g., paying the invoice. After the person has paid the invoice, s/he will manually change the workflow state from "Approved" 320 to "Paid" 330. By this, the invoice document will proceed in the workflow automatically. The persons responsible for a state transition in question can be defined as users or as so called "pseudo-users". Whereas a user is identified by a name, the pseudo-user is concept where a responsibility is defined according to a role. In such concept, the user who has been appointed to a role that has been defined by the corresponding object, will be responsible for the state transition.

Figure 3b shows an example of a metadata 350 for the invoice document. In particular, the workflow for the invoice document is shown. The representation of the metadata 350 shows various properties relating to the invoice. One of the properties is workflow having a state "Waiting approval". If it has been specified in metadata rules that a supervisor is the person who can approve/reject invoices, the workflow state transition from "Waiting approval" to another state can only be made by a person indicated in the metadata property "Supervisor" of the invoice. In this example the person is Mary May.

It is to be appreciated that the example shown in Figure 3b is an example, and the responsible persons can be indicated in the system in various different ways and not directly by the metadata of the corresponding document. In the example of Figure 3b, Mary May selects "Approved" state from the state alternatives, which updates the metadata representation. The updated metadata representation 370 corresponds to the new workflow value, and the view to the invoice is provided to a party responsible for paying, e.g., accounting team or a person.

With traditional data management systems, documents need to be read and reviewed manually. For example, if - in the example of Figure 3a, 3b - Mary May would like to check whether the invoice is within a budget or matches the offer or relates only to predefined costs, Mary should go through the content of the document manually. In addition, if there has been an offer or project budget, Mary should also check the offer or a minute where a project budget has been decided.

For one document, the manual reviewing may not be too laborious, but processing large volumes of documents to identify e.g., compliance issues often is considered time-consuming, labor-intensive and prone to human errors.

Another solution for traditional data management systems involves the use of software. However, these traditional software system are often limited in their capabilities, they lack flexibility and are not easy to adapt to changes. These systems often involve complicated configurations, onboarding, defining regular expressions/rules which are hard to manage, and they are limited to syntax matching which is language dependent. Furthermore, systems that do not have metadata struggle with managing changes to the documents or to the rules that govern their review, often requiring manual intervention.

The present embodiments addresses a critical challenge inherent in the manual document review process by providing an automated process for these arduous tasks with the help of Generative Artificial Intelligence (GenAI).

With the emergence of GenAI technology, knowledge work has faced the next level of transformation. In the context of data management systems, the GenAl solutions may be utilized in organizing information, understanding the context of documents and interacting with the organization's knowledge by using natural language. The Generative AI technology is based on machine learning, and the GenAI tools have been trained using enormous amounts of data. The trained tool is then prompted by a human input that triggers the tool to make complex calculations over the data to determine an output.

In the first phase in utilizing GenAI in data management systems, the machine learning (ML) models enable users to ask question on the content of the data, summarize documents or translate content. For example, by selecting a document in a data management system, the user can ask the ML model e.g., to summarize the document or find a certain term within the document. In the metadata based solution, the responses from the ML model can saved as metadata.

The present embodiments aim to improve the possibilities that utilize Generative AI operations in the context of data management systems. In the following, term "ML model" is an umbrella term for covering the functionalities performed in the present solution. The term "ML model" may thus cover operations by a ML model vault application that is an application stored in a data management system, operations by a ML service that is configured to create prompts based on requests made by the ML model vault application, and operations by a GenAI solution that execute the prompt. The present embodiments provide ML based automated document review and compliance check, which is referred here as "verification process".

The ML model according to present embodiments is designed to streamline the manual document review process. It automates the identification of non-compliance, issues, deviations, or irregularities within documents by applying a set of predefined language agnostic natural language rules, guidelines, regulations and policies. The rules are tied to metadata and workflow states, which makes it easier to manage any change and can trigger automated validation and workflow changes when a rule or a document is changed from its previously verified state. The rules can be precisely associated with specific document types/users/object, which ensures that the right rules apply to the right documents.

Following the review, the system according to present embodiments, can autonomously update workflow state or present the results and propose next steps to the user. The latter, i.e., the hybrid approach combining ML model's efficiency with human judgement, further ensures the robustness and reliability. Thus, the aim of the present embodiments is to increase efficiency and accuracy in document review process across various industries.

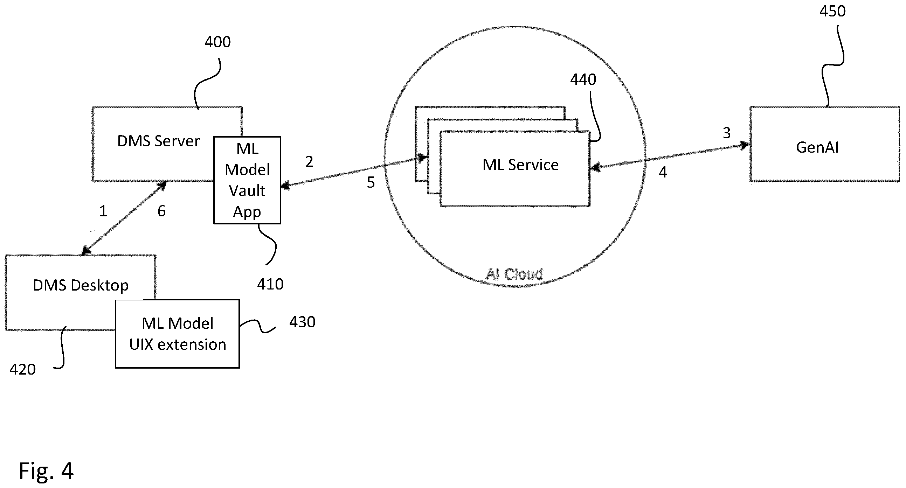

Figure 4 shows an example of an overall architecture of the system according to an embodiment. The system comprises a data management system (DMS) server 400 having a plurality of vault applications. One of the vault applications is a ML model vault application 410. In addition, the system comprises one or more vaults to store data objects and their metadata as well as rules to be applied for the data objects. The operation between the ML model vault application 410 and DMS server 400 is implemented through API calls.

When the ML model vault application 410 needs services that relate to intelligent solutions, it may make calls to the ML service 440 that operates with the GenAI solution 450. The ML service may be reached through a network connection, or the ML service can be a functionality of the ML model vault application.

ML model vault application 410 is able to perform the following operations for the data stored in the vault database: approving/rejecting/completing assignments, creating one or more metadata properties, generating automatic permissions, getting properties, getting version comments, getting workflows, setting one or more metadata properties, setting update info for objects, setting workflows, setting versions comments, etc.

In short, the process according to present embodiments follows the following signalling as presented by Figure 4. The verification process for a document may be initiated by receiving a user request, or by detecting an event in the DMS. As examples of the latter, an event can be appointing a new document to a class, or a change of a workflow state of a document. If the verification process starts as a result of a user request, the user makes a verification request for a certain object in the DMS Desktop 420 that has a ML model UIX (User Interface Extensibility) extension 430. The request is transmitted (1) to DMS server 400 and in particular to the ML model vault application 410. The ML model vault application 410 transmits (2) the selected document, its metadata and rules to the ML Service 440. The ML service 440 uses the data (i.e., document, metadata, rules) to create one or more prompts, which are sent (3) to the GenAI 450. The GenAI 450 performs the verification and responds (4) with the verification result. The ML service 440 may parse/restructure the output from GenAI 450 into a format that is consumable by the ML Model Vault App 410 and return (5) the modified output to the ML Model Vault App 410.

The ML model vault application 410 makes necessary metadata updates to data in the DMS server 400. The visual representation of the process and the results are shown (6) in the DMS desktop 420. Later in the disclosure term "ML model" refers to a combination of functionalities carried out by ML Model Vault Application 410, ML Service 440, and GenAI solution 450. This is because from the point of view of the solution being workable, it does not matter, whether there is one element capable of carrying out each of these functionalities, or whether there are two elements capable of carrying out each of these functionalities, or whether the functionalities have been shared between more than three elements.

The present embodiments are based on rules that are stored in a rules database. The rules can be predefined for certain metadata conditions (i.e., certain values defined for a document). An example of such metadata condition is a document type. Alternatively, or in addition, the rules can be generated dynamically based on request written in natural language by the user. In the following, the detailed discussion on the verification process is given, where rules are referred to. For understanding the solution, there is no need to differentiate how the rules are made. However, what is to be understood, is that the rules can reference metadata, which means that the rules are not simple queries made to documents' content, but the rules are interpreted based on the metadata of the given document or other object.

The verification process comprises the following actions. At first the system receives a selection of a document with a request for reviewing, said selection being performed by a user. Instead of one document, a selection of a plurality of documents can be received as well. Instead of user request, the data management system may trigger the ML model to perform the verification, for example, when rules or metadata is changed. After the selected document(s) has(have) been indicated, the data management system is configured to examine the metadata properties associated with the selected document(s). These metadata properties contain business critical information about the document, such as its class, customer, project, for example. The metadata properties are used by the system to select appropriate predefined rules to be applied in verification process. Instead of selecting the predefined rules, the system may use the user request for defining which kind of rules need to be applied to the document. This means that the query made by the user is converted into rules.

The predefined rules are stored in the data management system for different industry domains/projects/regulations. In particularly, the pre-defined rules may be stored in vault's metadata structure as a configuration. The dynamically created rules do not need to be stored, but can be, if indicated by the user.

If any of the metadata properties associated with the selected documents indicate that a predefined set of rules exist, the data management system identifies a correct set of rules to be applied. For example a metadata property "Type of the document" of a document can be used for determining the correct set of rules, which defines the important content (i.e., business critical information and clauses that can have been specified in the document's metadata) that should be derivable from or should appear in the document's content. For example, if the type of the document is "Agreement", the predefined rules may indicate that the document should have signatures of both parties, the document should indicate a term and it should have a starting date. These can be defined as a correct set of rules. The correct set of rules is later referred to as "set of rules". The set of rules serve as the criteria for evaluating the document's compliance, deviations or irregularities. When a plurality of documents is to be reviewed, each document may have their own respective set of rules differing from each other. However, any document in the plurality of documents that are considered to be from a same class or have a same type, may share the set of rules. Therefore, the amount of different set of rules may be less than the amount of documents to be reviewed.

The predefined rules can include metadata variables that need to be resolved. The resolving can be made by the ML model, in particular the ML model vault application, that makes the necessary calls to the DMS API.

If the metadata properties didn't refer to usage of predefined rules, and/or user's verification request has been defined broadly, not matching in any predefined configuration, the ML model can dynamically generate the rule to be applied based on the request. The ML model can resolve the query by utilizing the ML service, such as a large language model, which converts the query to be understood by the GenAI. The dynamically generated rules are referred also as "set of rules".

After having determined the set of rules, these rules are given to ML model, in particular to the ML Service, to verify the document's content. Other data to be input to the ML model comprises the text of the document that needs to be verified and document's metadata, and possibly any other metadata that has been resolved. The ML model enables the system to check the text content against the set of rules, which is referred to as a "verification process". In practice this is implemented by generating a prompt based on the rules and feeding the prompt to the GenAI solution. It is to be noticed that the verification process is language-agnostic, which means that the verification process can interpret natural language in multiple languages. Therefore the query made to ML model can be of any language, and also the documents reviewed by the ML model can be of any language.

The present system detects instances of non-compliance, issues, or deviations within the document. The result of the verification process, i.e., "verification result", can be shown to a user on a user interface of the client device, or it can run in the background to do follow-up tasks. The verification results can be evaluated by the ML model, such as a ML Model Vault Application, which can generate e.g., workflow update requests based on the verification result. For example, if the document complies with the rules, the ML model can ask the data management system to set the workflow state to "Verified" or to a state that is differently named but has an equal meaning. If the document has discrepancies, the ML model can ask the data management system to update the workflow state accordingly. For example, the ML model may trigger a review by a human user by requesting the data management system to define the workflow state to be "To be reviewed". As another example, the ML model may propose initiative corrective actions or route the document to a specific team for resolution. It is to be appreciated that different workflow states may require distinct set of rules, which can be defined and maintained by using the metadata.

When metadata, e.g., workflow, is updated as a result of the verification, the ML model uses the application programming interface (API) used in the data management system. The ML model is configured to send a request to update a specific property (e.g., "Workflow state", Property ID = 39) with specific values (e.g., "Pending", Workflow state ID = 23). As response to the request, the data management system is configured to set the value by updating the database entry associated to the given object. This results in a new object version with updated metadata (e.g., workflow state).

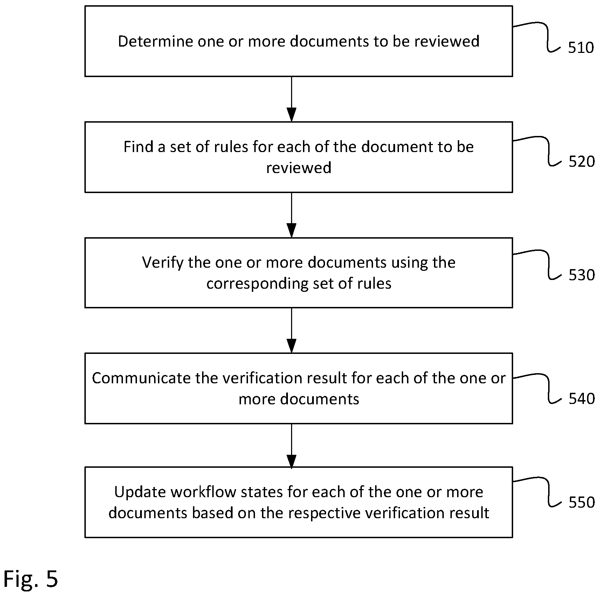

So, as a simple process, the reviewing process comprises steps as shown in Figure 5: determining one or more documents to be reviewed 510; find a set of rules for each of the documents to be reviewed 520; verify the one or more documents using the corresponding set of rules 530; communicate the verification result for each of the one or more documents 540; and update workflow states for each of the one or more documents based on the respective verification result 550. It is to be appreciated that the need to update the workflow states depends on the situation, and may not be necessarily applied in each verification round. Instead of updating workflow states, other metadata operations may be performed.

Since the reviewing process according to present embodiments heavily rely on metadata, the metadata has to be configured with the following capabilities. The system powered by metadata has a capability to track changes in rules or documents, which can trigger the review process. The system powered by metadata has a capability to contextualize rules based on combination of business-critical metadata and various workflow stages. The system powered by metadata has a capability to fully automate the workflow changes by adding an extra layer of verification. Also, the system powered by metadata has a capability to provide a justification why a particular rule was applied to a document. These capabilities may be implemented with corresponding program code or code module that is arranged to the metadata structure.

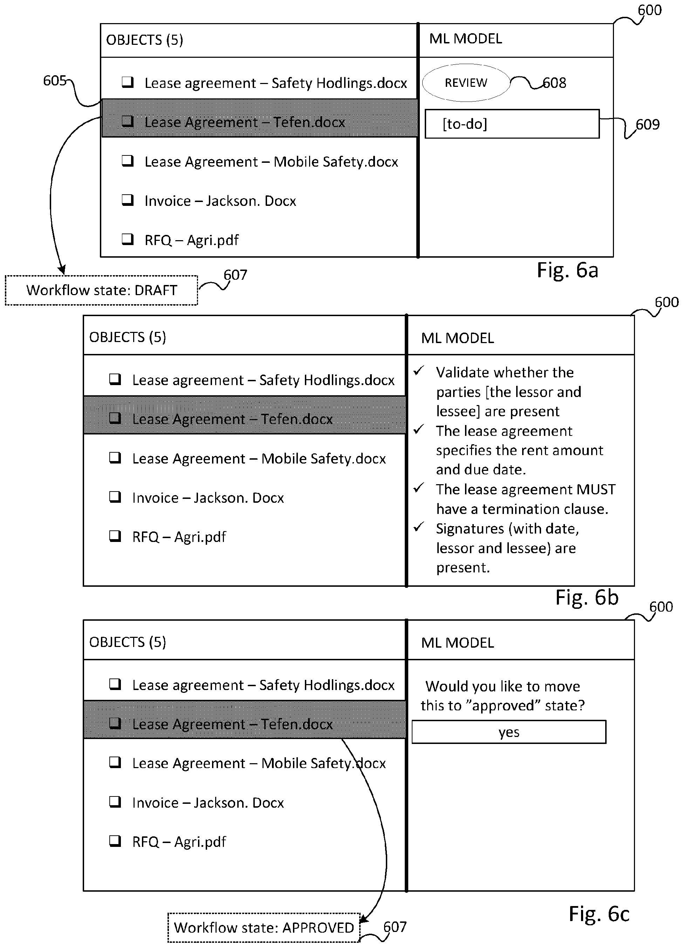

Figures 6a - 6c illustrate an example of a reviewing process according to present embodiment. A user interface for a document management system is shown in Figures 6a - 6c with reference 600. The user interface view 600 comprises a view for objects and a view to operations performed by a ML model. The user interface shown in Figures 6a - 6c, can be the ML model UIX extension of Figure 4. The view for the objects shows a list of stored documents. From this list, one of the documents is selected, i.e., "Lease agreement - Tefen.docx" 605. The selected document 605 comprises metadata 607 indicating at least that the workflow state is "Draft". The view for ML model provides functionalities that can be applied to the selected document. The functionalities may be provided as a direct selection button, such as "Review" 608, or as a field for receiving natural language-based query "to-do" 609. The user may type into the field 609 "Please review the document", which triggers the machine learning model to perform the verification. The set of rules for making the verification can be determined based on the type of the document, which in this case can be "agreement" or "lease agreement" depending on the metadata configuration. It is to be noticed that the request typed by the user in natural language may be in any supported language, regardless whether the documents are in different language than the request.

Another example for the verification request can be, e.g., a query written by the user "Total sales should not exceed the sales goal" when the document is e.g., a sales report. Such a query may not have a predefined rule, but the rule may be generated dynamically. The sales goal in this example is also a metadata property of the document being verified, and the total sales is mentioned in the document's content. Each document can have different sales goal, whereupon, this kind of a generic rule will resolve differently for each document. For example, for a document having a metadata *sales goal: 10,000USD,* the rule is *"Total sales should not exceed 10,000USD"* For example, for another document having a metadata *sales goal: 5,000USD,* the rule is *"Total sales should not exceed 5,000USD"* A result for this rule is determined from the document's content and returned to the user interface accordingly. This example may be extended to detect several documents in one verification round, e.g., by defining "Determine all the offer documents whose total sales do not exceed <sales goal>".

Yet another example relates to a situation, where metadata is referenced from another object. For example, the user may request the ML model to verify the following query: *"Invoice amount must be less than 10% of the ACME project budget".* This query is converted into rule, based on which the verification is carried out. The project budget is a reference to a metadata property *"Budgef"* on the *"ACME project"* object in the vault. This dynamically generated rule can be represented as follows, where the *Table* 1 relates to Rules table, and *Table* 2 relates to Rule reference table

**Table 1: Rules table**

| **Rule ID** | **Workflow state ID** | **Rule text** |
|---|---|---|
| 1 | 23 | "Invoice amount must be less than 10% of the %Reference 123% |

**Table 2: Rule reference table**

| **Rule Reference ID** | **Rule ID** | **Referenced Object ID** | **Referenced Property ID** |
|---|---|---|---|
| 123 | 1 | 52 | 1058 |

Then, when the ML model needs to evaluate the rule, it may to resolve the rule by using the value stored in the metadata property *"Budget"* on the ACME Project. If the budget was set to $10,000, the rule would resolve to *"Invoice amount must be less than 10% of $10,000",* which could then be further resolved, using the ML model to *"Invoice amount must be less than $1,000".* Based on this, the ML model verifies, whether the document (i.e., the invoice) satisfies this rule, and returns result accordingly.

The result of the verification is shown in Figure 6b. The ML model lists all the items that have been checked, and indicates whether they are complied with by the document. In the example of Figure 6b, the ML model has checked the following rules, which are the predefined set of rules defined for "Lease agreement" -types of documents: "Validate whether the parties [lessor and lessee] are present", "The lease agreement specifies the rent amount and due date", "The lease agreement MUST have a termination date", "Signatures (with date, lessor and lessee) are present". In this example, all the rules are accomplished by the selected document, whereupon the ML model prompts a question as shown in Figure 6c "Would you like to move this to "approved" state?". When the user selects "yes", or confirms positive answer in other way (e.g., by typing "yes" into a UI field), the ML model automatically generates a request to the DMS to change the workflow state 607 to Approved.

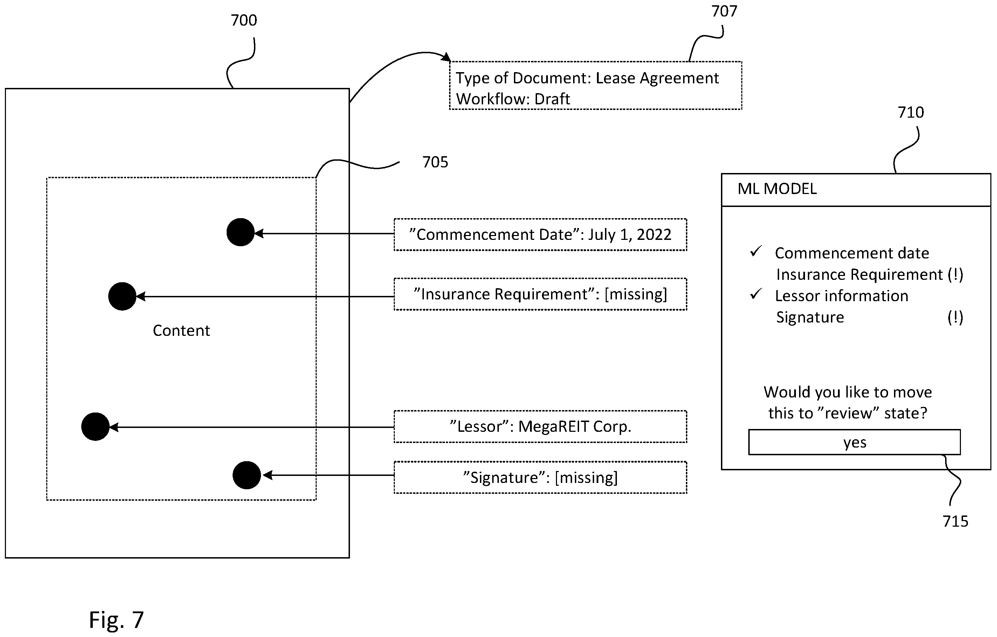

Figure 7 illustrates an example of the verification process performed by the ML model from another point of view. In Figure 7, a selected document 700 is shown. The document 700 has content 705. In addition, the document 700 has metadata 707, comprising a workflow and a type of the document. The type of the document is defined to be "Lease Agreement". The information concerning the type of the document is used by the ML model to determine the rules to be used when verifying the document. The rules specify, which information should be included in the document of a certain type. In the simplified example of Figure 7, the rules have specified that documents having type "Lease Agreement" should contain information concerning "Commencement Date", "Insurance Requirement", "Lessor", and "Signature". The ML model goes through the content 705 of the document 700 to see whether the aforementioned information appears in the document. The verification result 710 by the ML model indicates that "Commencement date" and "Lessor information" can be verified, however "Insurance Requirement" and "Signature" are missing. Due to the missing information, the ML model prompts a question ""Would you like to move this to "review" state?". When the answer is "yes", the ML model automatically changes the workflow state to "review".

The verification process according to present embodiments has been discussed with reference to Figures 6 and 7 in relation to Lease agreement. However, it is appreciated that this is one example of possible document types. The ML model can operate with any document type that has been specified in the metadata structure and has a set of rules that are important for that document type.

The verification process according to present embodiments can be further improved and extended. Other possible functionalities performed during the verification are listed below:
1. **Data integrity:** The ML model can determine whether invoice line items tally with the total amount. This can be further extended to determine if the total amount tally with a budget, if the budget has been defined in e.g., project metadata.
2. **Verify external documents:** If a document is dropped into a collaboration workspace by an external party, the ML model can screen the external document for the requirements (if requirements are not met, it can trigger a notification back to the user).
3. **Automatic/derived rules:** The rules for the ML model can be provided by the user, or they can be extracted from any policy/regulatory document. The rules can be in any language, written in natural language.
4. **Metadata referencing rules:** The rules can reference the metadata itself allowing flexibility and portability. This eliminates the need for creating static rules for every possible scenario. Instead, the verification system is capable of dynamically populating metadata values based on the given metadata context. E.g.: *"If <parties> has any obligations if the contract is terminated?".* The Property name *<parties>* can have multiple values, which will generate multiple rules. Based on which party has obligations, the appropriate workflow can be triggered.
5. **A verified stamp:** When the ML model has verified the document, a trust stamp can be added to a document while moving a document through various workflow stages.
6. **Batch Validation for any anomaly:** The ML model can run on a batch to flag the documents with issues.
7. **Batch ML model assisted review:** Given 10 responses to request for proposals (RFP), create a pros and cons based on given/important key performance indicators (KPI).
8. **Fact checks:** The ML model can perform fact checks for legal documents and automatically add references based on a repository of truth. To implement that the ML model can go through a document, find candidate facts, then for each, searches a repository for substantiation, or contradictory content.

The integration of machine learning model with existing metadata features is a powerful combination. It unlocks a multitude of possibilities for enhancing document review processes. By leveraging metadata-driven rules and AI-driven analysis, the ML model according to present embodiments achieves a harmonious balance between automation and precision.

The flexibility of the data management system allows for tailored rules at each workflow process set. Different sets of rules can be defined and enforced before documents transition to the next state. This adaptability ensures that compliance checks align with the specific context of each workflow stage.

The verification process implemented by the ML model automates tracking, for example in two areas. As an example document updates, when documents evolve, the system continuously monitors changes and repeat validation process and adjusts workflow states accordingly. As an example of rules updates, when the rules are modified or updated, the system reflects these changes across relate documents, to ensure consistency.

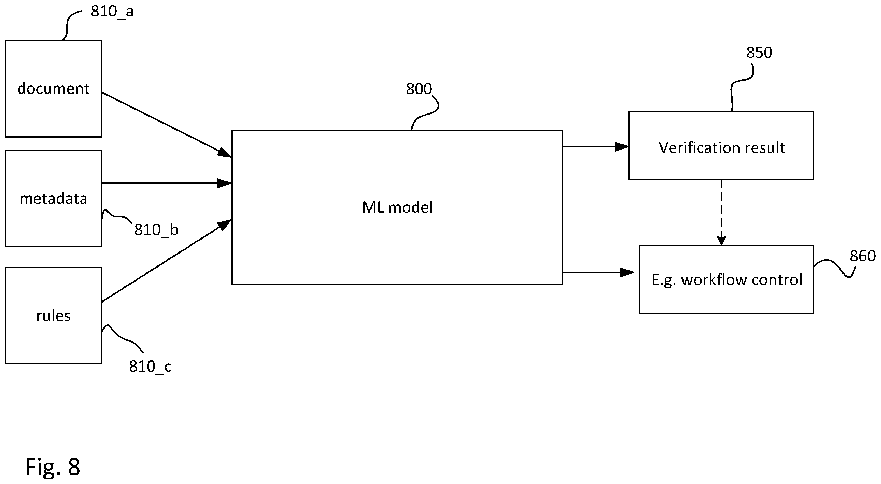

Figure 8 is a simple illustration of ML model 800 according to an embodiment. The ML model 800 receives as input at least a document 810_a to be reviewed, document's metadata 810_b, and set of rules 810_c relating to the document. The ML model 800 performs the verification based on the input, and provides a verification result 850. In addition, the ML model 800 is configured to request the workflow update 860 based on the verification result. This means that the ML model 800 is aware on different workflow states and their relationship to different verification results. It is to be appreciated that instead of or in addition to the workflow control 860, the ML model may request other metadata updates to other parts of the metadata of the document based on the verification result. Instead metadata update based on verification result, other document management operations can be performed.

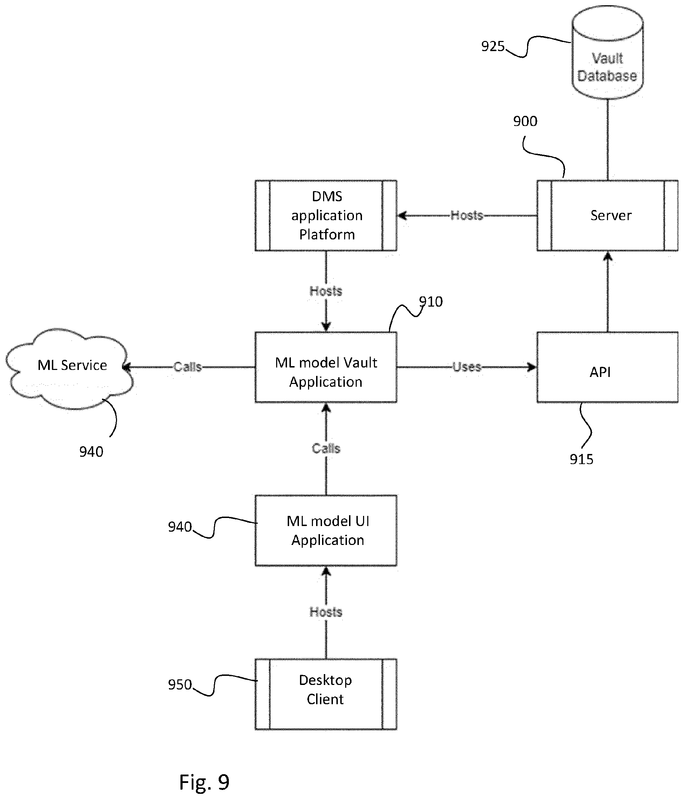

Figure 9 illustrate a high-level architecture diagram for the ML model according to present embodiments. When the ML model vault application 910 needs to get object data or metadata, or needs to make updates to the metadata, it uses application programming interface 915 for the data management server 900. The metadata is stored in the vault database 925. When the ML model vault application 910 needs to work with the ML model, it makes calls to the LLM Service 940 in the AI cloud.

For example, for setting a next workflow state, the ML model vault application 910 can use the API 915 for the server 900 to call *SetWorkflowState.* The ML model vault application 910 may pass in the object version and the workflow state information, and the server 900 can handle this call by crafting a correct SQL (Structured Query Language) to use to update the object's workflow state in the vault database 925. The ML model UI application 940 represented by the desktop client 950 shows the results of the ML model vault application 910.

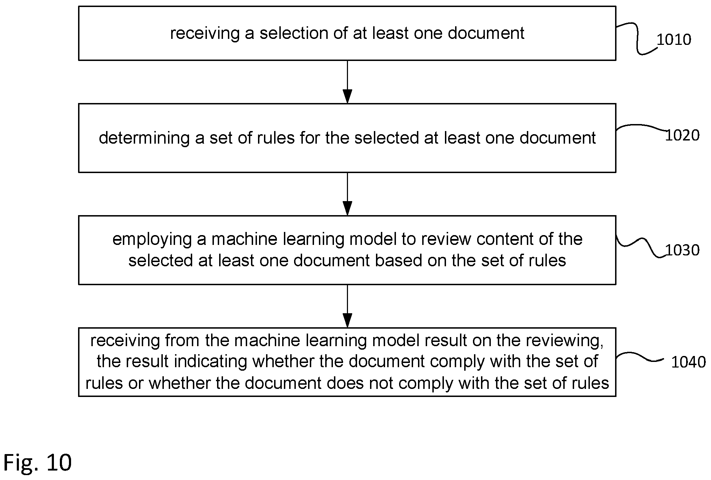

The method according to an embodiment is shown in Figure 10. The method generally comprises receiving a selection of at least one document 1010; determining a set of rules for the selected at least one document 1020; employing a machine learning model to review content of the selected at least one document based on the set of rules 1030; and receiving from the machine learning model result on the reviewing, the result indicating whether the document comply with the set of rules or whether the document does not comply with the set of rules 1040. Each of the steps can be implemented by a respective module of a computer system.

An apparatus according to an embodiment comprises means for receiving a selection of at least one document; means for determining a set of rules for the selected at least one document; means for employing a machine learning model to review content of the selected at least one document based on the set of rules; and means for receiving from the machine learning model result on the reviewing, the result indicating whether the document comply with the set of rules or whether the document does not comply with the set of rules. The means comprises at least one processor, and a memory including a computer program code, wherein the processor may further comprise processor circuitry. The memory and the computer program code are configured to, with the at least one processor, cause the apparatus to perform the method of Figure 10 according to various embodiments.

The various embodiments may provide advantages. For example, the verification process implemented by a ML model for a content in data management system accelerates document compliance verification process. Unlike manual reviews, which are time-consuming and prone to human error, the ML model can swiftly analyze documents, ensuring adherence to rules, guidelines and regulations. In addition, the precision and consistency of the checks made by a ML model surpass what humans can achieve. The system detects subtle deviations, inconsistencies, and non-compliance more effectively, resulting in higher-quality outcomes.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A method for a data management system, the data management system comprising a vault for storing at least a plurality of documents, where each of the documents is associated with metadata, wherein the metadata comprises a set of properties, the method comprising:
- receiving a selection of at least one document;
- determining a set of rules for the selected at least one document;
- employing a machine learning model to review content of the selected at least one document based on the set of rules; and
- receiving from the machine learning model a result on the reviewing, the result indicating whether the selected at least one document comply with the set of rules or whether the selected at least one document does not comply with the set of rules.

2. The method according to claim 1, wherein a metadata for the selected at least one document defines a workflow, wherein the method further comprises setting document's workflow to a state that corresponds to the result.

3. The method according to claim 1, further comprising updating document's metadata based on the result.

4. The method according to claim 1, further comprising using at least one metadata property to determine the set of rules.

5. The method according to claim 1, further comprising generating the set of rules based on a query received from a user via a user interface.

6. The method according to claim 1, further comprising reviewing content of the selected at least one document based on the set of rules and a metadata of the selected at least one document.

7. The method according to claim 1, further comprising reviewing content of the selected at least one document based on the set of rules and a metadata of another object being referred to by the set of rules.

8. An apparatus for a data management system, the data management system comprising a vault for storing a plurality of documents, where each of the documents is associated with metadata, wherein the metadata comprises a set of properties, wherein the apparatus comprises at least one processor and a memory for storing computer program, wherein when the computer program is executed by the at least one processor, the apparatus is caused to:
- receive a selection of at least one document;
- determine a set of rules for the selected at least one document;
- employ a machine learning model to review content of the selected at least one document based on the set of rules; and
- receive from the machine learning model a result on the reviewing, the result indicating whether the selected at least one document comply with the set of rules or whether the selected at least one document does not comply with the set of rules.

9. The apparatus according to claim 8, wherein a metadata for the selected at least one document defines a workflow, wherein when the computer program is executed by the at least one processor, the apparatus is further caused to set document's workflow to a state that corresponds to the result.

10. The apparatus according to claim 8, wherein when the computer program is executed by the at least one processor, the apparatus is further caused to update document's metadata based on the result.

11. The apparatus according to claim 8, wherein when the computer program is executed by the at least one processor, the apparatus is further caused to update at least one metadata property to determine the set of rules.

12. The apparatus according to claim 8, wherein when the computer program is executed by the at least one processor, the apparatus is further caused to generate the set of rules based on a query received from a user via a user interface.

13. The apparatus according to claim 8, wherein when the computer program is executed by the at least one processor, the apparatus is further caused to review content of the selected at least one document based on the set of rules and a metadata of the selected at least one document.

14. The apparatus according to claim 8, wherein when the computer program is executed by the at least one processor, the apparatus is further caused to review content of the selected at least one document based on the set of rules and a metadata of another object being referred to by the set of rules.

15. A non-transitory computer program product comprising computer program code configured to, when executed on at least one processor, cause an apparatus or a system to:
- receive a selection of at least one document;
- determine a set of rules for the selected at least one document;
- employ a machine learning model to review content of the selected at least one document based on the set of rules; and
- receive from the machine learning model a result on the reviewing, the result indicating whether the selected at least one document comply with the set of rules or whether the selected at least one document does not comply with the set of rules.
